Europäisches Patentamt

European Patent Office

Office européen des brevets

(19)

(11) **EP 1 327 865 A1**

(12) **EUROPÄISCHE PATENTANMELDUNG**

(43) Veröffentlichungstag:
16.07.2003 Patentblatt 2003/29

(51) Int Cl.⁷: **G01F 1/698**

(21) Anmeldenummer: 02000767.0

(22) Anmeldetag: 14.01.2002

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(71) Anmelder: **ABB RESEARCH LTD.**
**8050 Zürich (CH)**

(72) Erfinder:
• **Luchsinger, Rolf**
**5416 Kirchdorf (CH)**

• **Matter, Daniel**
**5200 Brugg (CH)**
• **Prêtre, Philippe**
**5405 Baden-Dättwil (CH)**
• **Kleiner, Thomas**
**5442 Fislisbach (CH)**

(74) Vertreter: **ABB Patent Attorneys**
**c/o ABB Schweiz AG**
**Brown Boveri Strasse 6**
**5400 Baden (CH)**

(54) **Verfahren zur thermischen Durchflussmessung mit nicht konstanten Heizpulsen**

(57)     Die Erfindung betrifft ein Verfahren und eine Vorrichtung zur thermischen Messung der Flussgeschwindigkeit (v) eines Fluids (3). In herkömmlichen thermischen Sensoren wird die Heizleistung P in Form von Rechteckpulsen zugeführt. Erfindungsgemäss werden die Sensormittel (1b) von einer Heizungssteuerung (2b) mit nichtkonstanten Heizpulsen mit einem subli-nearen Anstiegsverhalten P(t) versorgt. Dadurch kann ein nichtlineares Verhalten der Schwellwertzeit ($t_s$) bis zum Erreichen einer Schwellwerttemperatur ($T_s$) als Funktion der Flussgeschwindigkeit (v) zumindest teilweise kompensiert werden. Vorteile sind eine verbesserte Messgenauigkeit, eine verkürzte Messzeit und ein vergrösserter Messbereich für die Flussgeschwindigkeit (v).

Fig. 1

EP 1 327 865 A1

## Fig. 3a

**Beschreibung**

**TECHNISCHES GEBIET**

Die vorliegende Erfindung bezieht sich auf das Gebiet der Messung von Gas- oder Flüssigkeitsströmungen mit thermischen Sensoren. Sie geht aus von einem Verfahren und einem Sensor zur Massenflussmessung gemäss Oberbegriff der unabhängigen Ansprüche.

**STAND DER TECHNIK**

In dem U. S. Pat. No. 4,501,145 werden eine gattungsgemässe Methode und Vorrichtung zur thermischen Flussgeschwindigkeitsmessung offenbart. Dabei wird ein Sensor mit einem Heizpuls konstanter Leistung erwärmt, mindestens eine Anstiegszeit bis zum Erreichen einer vorgegebenen Temperaturschwelle gemessen und daraus ein vom Wärmeübergangskoeffizienten abhängiger Fluidparameter wie z. B. die Flussgeschwindigkeit gemessen. Nachteilig ist, dass der Temperaturanstieg mit zunehmender Flussgeschwindigkeit immer undifferenzierter ausfällt und in eine Sättigung kommt, so dass eine ausreichende Messempfindlichkeit nur in einem eingeschränkten Messbereich von Flussgeschwindigkeiten erreicht wird. Zudem müssen die Heizleistung und die Temperaturschwelle sorgfältig aufeinander und auf den gewünschten Flussgeschwindigkeits-Messbereich abgestimmt werden.

In der EP 0 180 974 werden ein Verfahren und eine Einrichtung zur Messung von Strömungsgeschwindigkeiten oder Massenflüssen dargestellt. Dabei werden bei konstanter Heizleistung für die instationären Sondentemperaturverläufe strömungsabhängige Kennlinienfelder bestimmt und auf die Flussgeschwindigkeit geschlossen, indem Temperaturen zu vorgegebenen Zeitpunkten oder Zeitintervalle bis zum Erreichen vorgegebener Temperaturschwellwerte gemessen werden. Nachteilig ist, dass der Flussgeschwindigkeits-Messbereich aufgrund der wiederum abnehmenden Temperaturauflösung bei hohen Flussgeschwindigkeiten auf die auswertefähigen Bereiche der Kennlinienfelder beschränkt ist.

**DARSTELLUNG DER ERFINDUNG**

Aufgabe der vorliegenden Erfindung ist es, ein Verfahren und eine Vorrichtung zur gepulsten Massenflussmessung mit einer verbesserten Messempfindlichkeit in einem vergrösserten Messbereich anzugeben. Diese Aufgabe wird erfindungsgemäss durch die Merkmale der unabhängigen Ansprüche gelöst.

In einem ersten Aspekt besteht die Erfindung in einem Verfahren zum Messen einer Flussgeschwindigkeit oder eines Massenflusses eines Fluids, insbesondere zum Messen von Heisswasserbezug im privaten, öffentlichen oder industriellen Bereich, bei welchem das Fluid über ein Sensorelement geführt wird, welches ein Heizmittel zur Temperaturänderung und ein Sensormittel zur Bestimmung seiner Temperatur aufweist, wobei mindestens zeitweise das Heizmittel mit einer Heizleistung in Form von Heizpulsen betrieben wird und eine strömungsabhängige Schwellwertzeit bis zum Erreichen eines vorgegebenen Temperaturschwellwerts am Sensormittel gemessen wird, wobei während zumindest einiger der Heizpulse eine nichtkonstante Heizleistung mit einem im wesentlichen sublinearen Anstiegsverhalten als Funktion der Zeit zur zumindest teilweisen Kompensation eines nichtlinearen Verhaltens der Schwellwertzeit als Funktion der Flussgeschwindigkeit gewählt wird. Ein sublineares Anstiegsverhalten bedeutet, dass während eines Heizpulses die Heizleistung eine Funktion der Zeit mit einer monoton abnehmenden ersten Zeitableitung ist. Im wesentlichen sublinear bedeutet, dass kurzfristige Abweichungen hiervon, z. B. eine kurzfristige zunehmende Zeitableitung, tolerabel ist, sofern das Anstiegsverhalten global, d. h. bei Bildung abschnittsweiser Mittelwerte über den gesamten Heizpuls, sublinear bleibt und eine von Abschnitt zu Abschnitt abnehmende erste Zeitableitung aufweist. Eine solcherart abflachende Zunahme der Heizpulsleistung führt zu dem gewünschten Effekt, dass sowohl niedrige als auch hohe Flussgeschwindigkeiten mit einer grossen Genauigkeit und zugleich relativ kurzen Messdauer bestimmt werden können. Mit dem Verfahren kann also der Messbereich erweitert, die Messgenauigkeit erhöht, die Messzeit verkürzt und bei Bedarf die Messrepetitionsrate erhöht werden. Darüberhinaus ist eine Anpassung der Heizleistung an die Temperaturschwelle oder den Flussgeschwindigkeits-Messbereich nicht erforderlich oder unkritisch, da die Temperaturschwelle in jedem Fall wegen der Zunahme der Heizleistung erreicht wird.

In einem ersten Ausführungsbeispiel wird das Anstiegsverhalten als Funktion der Zeit und gegebenenfalls der zu messenden Flussgeschwindigkeit selber so variiert, dass die Schwellwertzeit zumindest näherungsweise, d. h. insbesondere zumindest an diskreten Flussgeschwindigkeitswerten, eine lineare Funktion der Flussgeschwindigkeit ist. Durch die Linearität wird eine über den gesamten Flussgeschwindigkeits-Messbereich im wesentlichen gleichbleibende Messempfindlichkeit erreicht. Dabei sind kleinere lokale Abweichungen von der Linearität tolerabel. Die lineare Messcharakteristik wird gegebenenfalls zumindest punktweise über den gesamten Messbereich dadurch erreicht, dass für unterschiedliche Flussgeschwindigkeits-Teilmessbereiche ein angepasstes Anstiegsverhalten der Heizpulsleistung verwendet wird.

Im Ausführungsbeispiel gemäss Anspruch 4 wird ein solches angepasstes Anstiegsverhalten durch den flussgeschwindigkeitsabhängigen Amplitudenfaktor erreicht. Dadurch wird eine lineare Charakteristik der Schwellwertzeit als Funktion der Flussgeschwindigkeit zumindest punktweise und unabhängig vom ersten thermischen Übergangswiderstand zwischen Heizmittel und Sensorelement-Oberfläche realisiert.

Das Ausführungsbeispiel gemäss Anspruch 3 hat den Vorteil einer besonders einfachen und einfach implementierbaren Zeitabhängigkeit des Anstiegsverhaltens der Heizleistung. Diese Zeitabhängigkeit ist insbesondere zur um so besseren Linearisierung der Schwellwertzeit als Funktion der Flussgeschwindigkeit geeignet, je kleiner der erste thermische Übergangswiderstand gewählt wird.

Das Ausführungsbeispiel gemäss Anspruch 5 hat den Vorteil, dass für eine einfache zylindrische Form des Sensorelements eine exakte Strömungsabhängigkeit des zweiten thermischen Übergangswiderstands angegeben werden kann.

Die Ausführungsbeispiele gemäss Ansprüchen 6 und 7 haben den Vorteil, dass das implizite Probleme der Abhängigkeit der Heizleistung von der zu messenden Grösse einfach und zuverlässig durch vorgängig bestimmte Kalibrationskurven und durch Abschätzung oder a priori Kenntnis der mutmasslichen Flussgeschwindigkeit gelöst wird.

Das Ausführungsbeispiel gemäss Anspruch 8 hat den Vorteil, dass bei vernachlässigbarem ersten thermischen Übergangswiderstand der lineare Zusammenhang zwischen Schwellwertzeit und Flussgeschwindigkeit über den gesamten Flussgeschwindigkeits-Messbereich gültig und exakt berechenbar ist.

In einem zweiten Aspekt besteht die Erfindung in einem Massenflusssensor zum Ermitteln einer Flussgeschwindigkeit oder eines Massenflusses eines Fluids gemäss dem zuvor beschriebenen Verfahren. Der Sensor umfasst ein Sensorelement mit einem Heizmittel und einem Sensormittel zur thermischen Messung in einem Fluid und eine Steuer- und Auswerteeinheit mit einer Heizungssteuerung zur Erzeugung von Heizpulsen für das Heizmittel und einer Messeinrichtung zur Auswertung der thermischen Messung und zur Bestimmung einer Flussgeschwindigkeit oder eines Massenflusses aus einer strömungsabhängigen Schwellwertzeit bis zum Erreichen eines vorgegebenen Temperaturschwellwerts am Sensormittel, wobei die Heizungssteuerung Mittel zur Erzeugung einer nichtkonstanten Heizleistung mit einem im wesentlichen sublinearen Anstiegsverhalten als Funktion der Zeit umfasst und die Steuer- und Auswerteeinheit Mittel zur zumindest teilweisen Kompensation eines nichtlinearen Verhaltens der Schwellwertzeit als Funktion der Flussgeschwindigkeit aufweist.

Die Ausführungsbeispiele gemäss Ansprüchen 10 und 11 haben den Vorteil einer besonders einfachen und genauen Sensorsteuerung und Messwerterfassung.

Weitere Ausführungen, Vorteile und Anwendungen der Erfindung ergeben sich aus abhängigen Ansprüchen sowie aus der nun folgenden Beschreibung und den Figuren.

## KURZE BESCHREIBUNG DER ZEICHNUNG

Es zeigen:

Fig. 1 im Querschnitt ein durchströmtes Rohr oder einen Strömungskanal mit einem erfindungsgemässen Massenflusssensor für einen Betrieb mit nicht rechteckförmigen Heizpulsen;

Fig. 2a, 2b, 2c, 2d einen gepulsten Betrieb eines Massenflusssensors mit rechteckförmigen Heizpulsen gemäss Stand der Technik;

Fig. 3a, 3b, 3c einen gepulsten Betrieb eines Massenflusssensors mit erfindungsgemässen, nicht rechteckförmigen Heizpulsen; und

Fig. 4 eine Schar von Kalibrationskurven der Schwellwertzeit als Funktion der Flussgeschwindigkeit für drei strömungsabhängige Heizleistungen.

In den Figuren sind gleiche Teile mit gleichen Bezugszeichen versehen.

## WEGE ZUR AUSFÜHRUNG DER ERFINDUNG

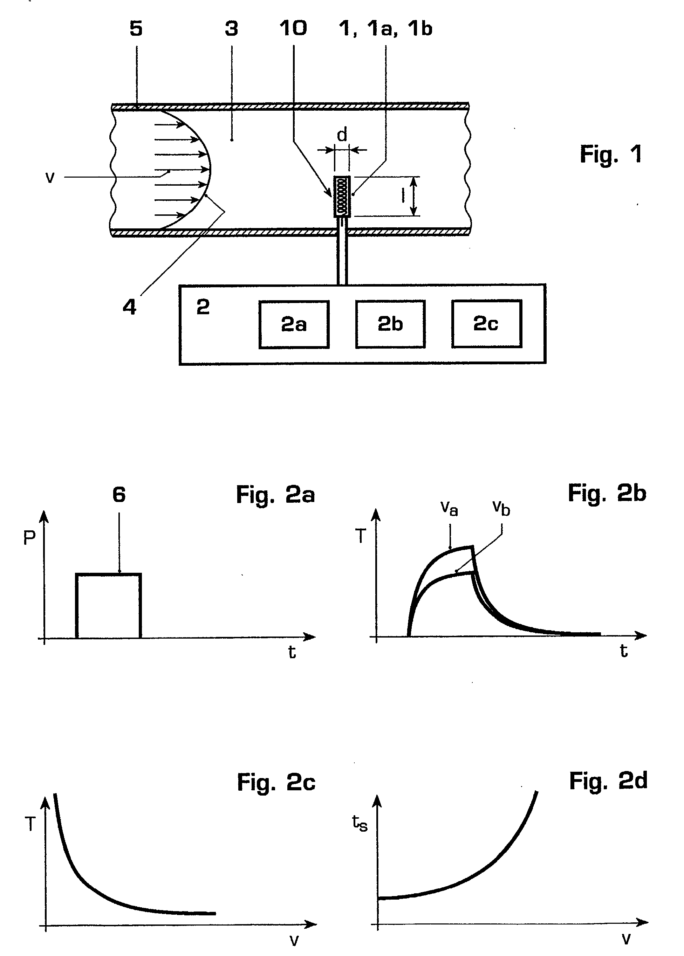

Fig. 1 zeigt einen thermischen Massenflusssensor 1, 2, der ein in einem Strömungskanal oder Rohr 4 angeordnetes Sensorelement 1 und eine Steuer- und Auswerteeinheit 2 umfasst. Im Rohr 4 strömt ein Fluid 3, z. B. eine Flüssigkeit 3 oder ein Gas 3, mit einem Strömungs- oder Geschwindigkeitsprofil 5. Das Sensorelement 1 ist einer zu messenden Strömungsgeschwindigkeit v ausgesetzt. Das Sensorelement 1 weist ein Heizmittel 1a zur Temperaturänderung und ein Sensormittel 1b zur Bestimmung seiner Temperatur auf.

Gemäss Fig. 2a-2d ist es bekannt, das Heizmittel 1a mit einer Heizleistung P in Form konstanter Heizpulse 6 zu betreiben, eine strömungsabhängige Temperaturänderung T am Sensorelement 1 zu messen und daraus - bei gegebener konstanter, d. h. rechteckförmiger Heizleistung - auf die Flussgeschwindigkeit v oder den Massenstrom zu schliessen. Statt Temperaturen T bei einer fixen Messzeit t können auch strömungsabhängige Schwellwertzeiten $t_S$

bis zum Erreichen eines vorgegebenen Temperaturschwellwerts $T_S$ ausgewertet werden. In Fig. 2b sind beispielhaft zwei zeitabhängige Temperaturverläufe T(t) für zwei Flussgeschwindigkeiten $v_a < v_b$ dargestellt. Fig. 2c zeigt die resultierende Messkurve oder Charakteristik der Temperatur zu einem bestimmten Zeitpunkt als Funktion der Flussgeschwindigkeit T(v), die eine stark abnehmende Messempfindlichkeit für zunehmende Flussgeschwindigkeiten v aufweist. Dadurch werden die Messgenauigkeit und der Messbereich auf sehr unvorteilhafte Weise eingeschränkt. Fig. 2d zeigt das entsprechende, stark nichtlineare Verhalten der thermischen Messung der Schwellwertzeit $t_S$ als Funktion der Flussgeschwindigkeit v. Die nichtlineare $t_S(v)$-Charakteristik hat mehrere Nachteile. Bei kleinen Flussgeschwindigkeiten v ist die Messempfindlichkeit gering. Bei hohen Flussgeschwindigkeiten v kann von der theoretisch hohen Messempfindlichkeit nicht profitiert werden, weil die Schwellwertzeiten $t_S$ nur mit grosser Unsicherheit aus den flachen, schleifenden Schnittpunkten zwischen dem Temperaturanstieg T(t) und der Schwellwerttemperatur $T_S$ bestimmbar sind. Ausserdem ist die Festlegung der Schwellwerttemperatur $T_S$ sehr kritisch. Wenn $T_S$ niedrig gewählt wird, werden die Schwellwertzeiten $t_S$ kurz und entsprechend wird $t_s(v)$ sehr flach und die Messauflösung für kleine v wird schlecht. Wenn $T_S$ hoch gewählt wird, setzt die nichtlineare, überproportionale Zunahme von $t_S(v)$ schon bei kleinen Geschwindigkeiten v ein und zeigt wegen der flachen Schnittpunkte einen steilen Anstieg. Im schlimmsten Fall wird $T_S$ nicht erreicht und die Flussgeschwindigkeit v ist nicht mehr messbar. Auch im zulässigen Messbereich für v ist eine subtile Wahl und gegebenenfalls wiederholte Anpassung von $T_S$ erforderlich, um einen nützlichen Messbereich mit einer auswertbaren Messcharakteristik $t_S(v)$ zu erhalten.

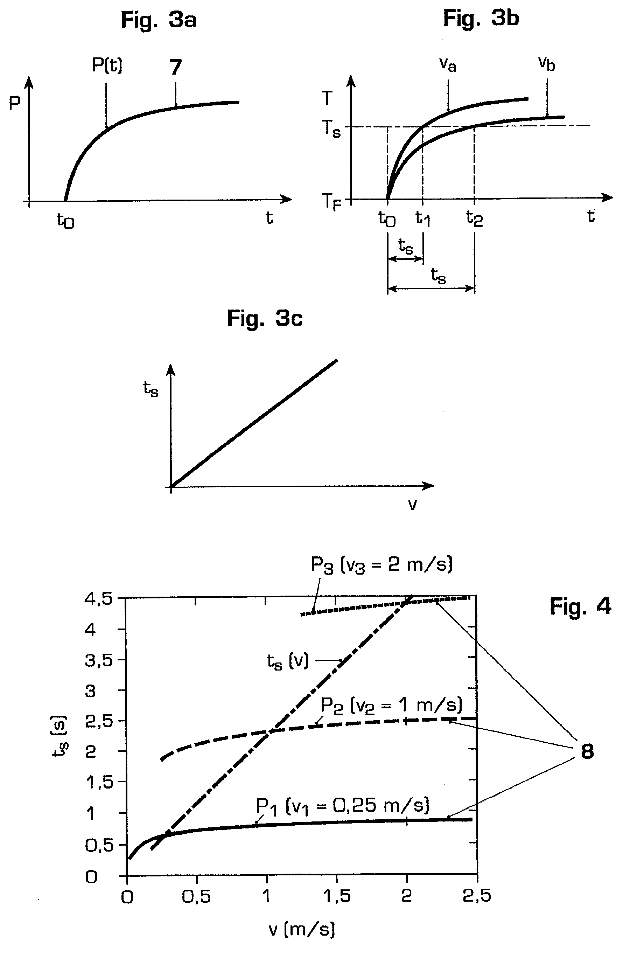

In Fig. 3a-3c wird das erfindungsgemässe Verfahren erläutert. Zum Zeitpunkt $t_0$ wird ein zeitabhängiges und gegebenenfalls vom gewählten Flussgeschwindigkeitsbereich abhängiges Heizleistungssignal P(t) gestartet und gemäss einem nicht rechteckförmigen, sublinearen Anstiegsverhalten P(t) erhöht. Derartige Heizpulse 7 werden dem Heizmittel 1a zumindest von Zeit zu Zeit zugeführt (nicht dargestellt). Bevorzugt werden die strömungsabhängigen Zeiten $t_1$, $t_2$ bis zum Erreichen eines vorgebbaren Temperaturschwellwerts $T_S$ gemessen und daraus die strömungsabhängigen Schwellwertzeiten $t_S = t_1 - t_0$ für $v_a$ und $t_S = t_2 - t_0$ für $v_b$ bestimmt. Im Gegensatz zu Fig. 2c ist $t_S(v)$ eine monoton steigende Funktion. Aufgrund der erfindungsgemässen Abflachung des Anstiegsverhaltens P(t) kann nun das störende Sättigungsverhalten in T(t) (Fig. 2c) oder das störende nichtlineare Verhalten in $t_S(v)$ (Fig. 2d) weitgehend kompensiert werden und eine über einen weiten Messbereich von Flussgeschwindigkeiten v nützliche, gut auswertbare Messfunktion $t_S(v)$ erhalten werden. Aufgrund des erweiterten Messbereichs ist der Massen- oder Flussgeschwindigkeitssensor besonders zum Messen von Heisswasserbezug im privaten, öffentlichen oder industriellen Bereich geeignet.

Im Folgenden wird eine detailliertere Analyse für eine optimale Gestaltung der Heizleistungspulse 7 gegeben. In einem einfachen thermischen Modell besitzt das Sensorelement 1 eine Wärmekapazität $C_S$, einen ersten thermischen Übergangswiderstand $R_S$ zwischen dem Heizmittel 1a und einer Oberfläche 10 des Sensorelements 1 und einen zweiten thermischen Übergangswiderstand $R_l = (h \cdot A)^{-1}$ zwischen der Oberfläche 10 des Sensorelements 1 und dem Fluid 3, wobei h ein strömungsabhängiger Wärmeübergangskoeffizient zwischen dem Sensorelement 1 und dem Fluid 3 und A eine Kontaktoberfläche zwischen dem Sensorelement 1 und dem Fluid 3 ist. Gemäss VDI-Wärmeatlas (VDI-Richtlinien 3522, VDI-Handbuch Messtechnik I, VDI-Verlag GmbH, Düsseldorf 1987) ist für ein zylinderförmiges, seitlich angeströmtes Sensorelement 1 mit Durchmesser d der Wärmeübergangskoeffizient h gegeben durch die Gleichung

$$h = (\lambda/d) \cdot 1{,}11 \cdot C \cdot Pr^{0,31} \cdot Re^m \, , \qquad\qquad (G1)$$

wobei $\lambda$ eine Wärmeleitfähigkeit des Fluids 3 ist, C ein Parameter und m ein Exponent ist, die beide von einer Reynoldszahl Re des Fluids 3 abhängen, und Pr eine Prandtlzahl des Fluids 3 ist. Mit $Pr = \eta \cdot c_p / \lambda$ , wobei $\eta$ = eine dynamische Viskosität des Fluids 3 und $c_p$ = eine spezifische Wärme des Fluids 3, und $Re = \rho \cdot d \cdot v / \eta$, wobei $\rho$ = eine Dichte und v = eine Flussgeschwindigkeit des Fluids 3, ist h proportional zu $v^m$ und es gilt

$$R_l = \gamma \cdot v^{-m} \, , \qquad\qquad (G2)$$

wobei $\gamma = d/(A \cdot \lambda \cdot 1{,}11 \cdot C \cdot Pr^{0,31} \cdot (\rho \cdot d / \eta)^m)$ eine Konstante ist. Für die Reynoldszahl-abhängigen Parameter C und m können tabellierte Werte verwendet werden, z. B. C = 0,615 und m = 0,466 für Reynoldszahlen zwischen 40 und 4000, die einen laminaren Fluss des Fluids 3 charakterisieren.

Im folgenden sei ein numerisches Beispiel für Wasser bei Raumtemperatur angegeben: $\eta = 1 \cdot 10^{-3}$ Ns/m$^2$, $\rho = 998{,}2$ kg/m$^3$, $\lambda = 0{,}598$ W/(m·K) und $c_p = 4182$ J/(kg·K). Dann ist Pr = 6,993 und für d = 1,9 mm wird Re = 1897·v. Für Geschwindigkeiten v zwischen 0,02 m/s und 2 m/s nehmen die Parameter C und m die Werte C = 0,615 und m = 0,466 an. Dies führt zu Wärmeübergangskoeffizienten h zwischen 2140 W/(m$^2$·K) bei v = 0,02 m/s und 18270 W/(m$^2$·K) bei v = 2 m/s und entsprechenden zweiten thermischen Übergangswiderständen $R_l = 6,5$ K/W bei v = 0,02 m/s und $R_l = 0,7$ K/

W bei v=2 m/s für ein Sensorelement 1 der Länge l=12 mm.

Mit einem zeitabhängigen und geschwindigkeitsabhängigen Anstiegsverhalten P(t) der Heizleistung gemäss der Gleichung

$$P(t) = P_0 \cdot (1+R_S/R_I)^{-1} \cdot t^{\alpha} \, , \tag{G3}$$

wobei $P_0$=ein Heizleistungsfaktor und $\alpha$=ein Exponent des Anstiegsverhaltens P(t) ist, kann das zuvor genannte nichtlineare, insbesondere überproportionale Verhalten der Messcharakteristik $t_S$(v) näherungsweise kompensiert oder sogar die Messcharakteristik $t_S$(v) zumindest abschnittsweise oder an Stützstellen punktweise linearisiert werden. Insbesondere gilt für Messzeiten oder Schwellwertzeiten $t_S > \tau$, insbesondere $t_S > 10 \cdot \tau$, mit $\tau = C_S \cdot R_S$

$$T(t) = P_0 \cdot t^{\alpha} \cdot R_I + T_F \, , \tag{G4}$$

wobei $T_F$ die ungestörte Fluidtemperatur bezeichnet. Das gleiche Aufwärmverhalten T(t) wird in der Näherung $R_S < R_I$, insbesondere $R_S/R_I < 0,1$ und besonders bevorzugt $R_S/R_I < 0,01$, mit einer geschwindigkeitsunabhängigen Heizpulsleistung $P(t) = P_0 \cdot t^{\alpha}$ erhalten.

Mit einer Wahl des Heizleistungsexponenten $\alpha$=m gilt dann

$$T(t) = P_0 \cdot \gamma \cdot (t/v)^{m} + T_F \tag{G5}$$

und die Schwellwertzeit $t_S$ für einen gegebenen Temperaturschwellwert $T_S$ ist durch die Gleichung

$$t_S(v) = (T_S - T_F)^{1/m} \cdot (P_0 \cdot \gamma)^{-1/m} \cdot v \tag{G6}$$

gegeben. Die Messdauer oder Schwellwertzeit $t_S$ ist also eine lineare Funktion der zu bestimmenden Flussgeschwindigkeit v, wie in Fig. 3c dargestellt, wenn der Heizleistungsexponent $\alpha$ gleich dem Geschwindigkeitsexponenten m des Wärmeübergangskoeffizienten h ist und insbesondere wenn der erste thermische Übergangswiderstand $R_S$ des Sensorelements 1 vernachlässigbar klein ist gegenüber dem zweiten thermischen Übergangswiderstand $R_I$ zum Fluid 3. Letztere Bedingung ist erfüllt, wenn $R_S/R_I < 1$, vorzugsweise $R_S/R_I < 0,1$ und besonders bevorzugt $R_S/R_I < 0,01$ ist.

Es wird also mit Vorteil das Anstiegsverhalten P(t) proportional zu $t^m$ gewählt wird, wobei der Exponent m kleiner als 1 gewählt wird, insbesondere $m \leq 0,5$ und besonders bevorzugt m=0,466 für eine Reynoldszahl zwischen 40 und 4000. Der Heizleistungsexponent $\alpha$ kann auch nur näherungsweise gleich m gewählt werden, d. h. $\alpha \approx m$, um die gewünschte, zumindest näherungsweise Kompensation des nichtlinearen Verhaltens von $t_S$(v) bei hohen Flussgeschwindigkeiten v zu erreichen.

Es wird ferner mit Vorteil das Anstiegsverhalten P(t) proportional zu einem zeitunabhängigen Amplitudenfaktor $(1+R_S/R_I)^{-1}$ gewählt.

Im allgemeinen Fall wird die Heizleistung gemäss Gleichung (G3) via $R_I$ auch in Abhängigkeit der zu messenden Flussgeschwindigkeit oder des mutmasslichen Messbereichs der zu messenden Flussgeschwindigkeit v variiert, und zwar so, dass wiederum eine lineare Beziehung zwischen der Schwellwertzeit $t_S$ und der Flussgeschwindigkeit v gegeben ist. Diese lineare Beziehung ist auch dann unabhängig von $R_S$, wenn $R_S$ einen nicht vernachlässigbaren Wert gegenüber $R_I$ annimmt.

In diesem Fall ist dem Messvorgang eine Kalibration und Auswahl einer passenden Kalibrationskurve 8 gemäss Fig. 4 vorgeschaltet. In einem ersten Verfahrensschritt werden diskrete Werte der Flussgeschwindigkeit $v_i$ gewählt und zugehörige Anstiegsverhalten $P_i$(t) der Heizleistung bestimmt, wobei i=1, 2, 3, ... ein Index ist. In einem zweiten Verfahrensschritt werden eine Schar von Kalibrationskurven 8 der Schwellwertzeit $t_S$ als Funktion der Flussgeschwindigkeit v für die Anstiegsverhalten $P_i$(t) bestimmt. In einem dritten Verfahrensschritt wird aufgrund einer zuvor gemessenen Flussgeschwindigkeit oder aufgrund von a priori Information über die mutmassliche Flussgeschwindigkeit eine nach Massgabe einer gewünschten Messgenauigkeit für die Flussgeschwindigkeit v und einer gewünschten Messdauer $t_S$ bevorzugte Kalibrationskurve 8 ausgewählt und zur Bestimmung der Flussgeschwindigkeit v verwendet oder es wird ausgehend von der Kalibrationskurve 8 zum niedrigsten Flussgeschwindigkeitswert $v_{i=1}$ sukzessive aufsteigend zu höheren Flussgeschwindigkeitswerten $v_{i>1}$ oder durch Abschätzung in einem Schritt eine nach Massgabe einer gewünschten Messgenauigkeit für die Flussgeschwindigkeit v und einer gewünschten Messdauer $t_S$ bevorzugte Kalibrationskurve 8 bestimmt und zur Bestimmung der Flussgeschwindigkeit v verwendet.

Dieses stufenweise Vorgehen ist in Fig. 4 für drei Kalibrationskurven 8 gezeigt, die mit drei Heizleistungskurven $P_1(t)$ bei $v_1$=0,25 m/s, $P_2(t)$ bei $v_2$=1 m/s und $P_3(t)$ bei $v_3$=2 m/s gewonnen wurden. Durch die Kalibrationskurven 8 ist zumindest punktweise eine lineare Messcharakteristik $t_S(v)$ gegeben. Dabei wurden typische Werte von $R_S$≈35 W/K und $R_I$≈5 W/K angenommen. Selbst bei einer solcherart unvorteilhaften Grössenverteilung der thermischen Übergangswiderstände, nämlich $R_S \gg R_I$, kann mit dem erfindungsgemässen Verfahren noch eine genaue und schnelle Messung in einem grossen Flussgeschwindigkeits-Messbereich durchgeführt werden. Prinzipiell können auch mit der Kalibrationskurve zu $v_3$=2 m/s noch sehr kleine Flussgeschwindigkeiten v<1 m/s gemessen werden. Durch das erfindungsgemässe Verfahren können jedoch die Messdauer $t_S$ wesentlich verkürzt und der Heizenergiebedarf entsprechend gesenkt werden.

Mit Vorteil werden eine Anzahl und Verteilung der Kalibrationskurven 8 nach Massgabe einer gewünschten Messauflösung und eines gewünschten Messbereichs der Flussgeschwindigkeit v gewählt.

Fig. 1 zeigt die Vorrichtung zur Ausführung des oben dargestellten Verfahrens. Hierbei bezeichnet 2a eine Heizungssteuerung zur Erzeugung von Heizpulsen 7 für das Heizmittel 1a und 2b eine Messeinrichtung zur Auswertung der thermischen Messung und zur Bestimmung einer Flussgeschwindigkeit v oder eines Massenflusses aus einer strömungsabhängigen Schwellwertzeit $t_S$ bis zum Erreichen eines vorgegebenen Temperaturschwellwerts $T_S$ am Sensormittel 1b. Erfindungsgemäss umfasst die Heizungssteuerung 2b Mittel zur Erzeugung einer nichtkonstanten Heizleistung P mit einem im wesentlichen sublinearen Anstiegsverhalten P(t) als Funktion der Zeit t und weist die Steuer- und Auswerteeinheit 2 Mittel zur zumindest teilweisen Kompensation eines nichtlinearen Verhaltens der Schwellwertzeit $t_S$ als Funktion der Flussgeschwindigkeit v auf.

In einem bevorzugten Ausführungsbeispiel umfasst die Steuer- und Auswerteeinheit 2 Hardware und/oder Software zur Erzeugung eines Anstiegsverhaltens P(t) proportional zu $t^m$ und/oder zu einem zeitunabhängigen Amplitudenfaktor $(1+R_S/R_I)^{-1}$. Ferner kann die Steuer- und Auswerteeinheit 2 Kalibrationsmittel 2c zur Ausführung des ersten und zweiten Verfahrenschritts des oben dargestellten Kalibrationsvorgangs aufweisen. Vorzugsweise weist das Sensorelement 1 einen elektrischen Heizdraht 1a, 1b mit einem temperaturabhängigen Widerstand auf, der zugleich als Heizmittel 1a und als Sensormittel 1b betreibbar ist.

Das erfindungsgemässe Verfahren und die Vorrichtung zur Ausführung des Verfahrens sind für beliebige Fluide 3, insbesondere für Flüssigkeiten 3 oder Gase 3, geeignet.

**BEZUGSZEICHENLISTE**

| | |
|---|---|
| 1 | Sensorelement |
| 1a | Heizmittel |
| 1b | Sensormittel |
| 2 | Steuer- und Auswerteeinheit |
| 2a | Heizungssteuerung |
| 2b | Messeinrichtung |
| 2c | Kalibrationsmittel |
| 1, 2 | Flussgeschwindigkeitssssensor, Massenflusssensor |
| 3 | Fluid; Flüssigkeit, Gas |
| 4 | Strömungsprofil |
| 5 | Strömungskanal, Rohr |
| 6 | rechteckförmiger konstanter Heizpuls (Stand der Technik) |
| 7 | sublinearer nichtkonstanter Heizpuls |
| 8 | Kalibrationskurven |
| 10 | Oberfläche des Sensorelements |

| | |
|---|---|
| P | Heizleistung |
| $P(t), P_i(t)$ | Anstiegsverhalten |
| T | Temperatur |
| $T_S$ | Schwellwerttemperatur |
| $T_F$ | ungestörte Fluidtemperatur |
| t | Zeit, Zeitvariable |
| $t_0, t_1, t_2$ | Zeitpunkte |
| $t_S$ | Schwellwertzeit |
| $v, v_i$ | Flussgeschwindigkeit |

**Patentansprüche**

1. Verfahren zum Messen einer Flussgeschwindigkeit (v) oder eines Massenflusses eines Fluids (3), insbesondere zum Messen von Heisswasserbezug im privaten, öffentlichen oder industriellen Bereich, bei welchem das Fluid (3) über ein Sensorelement (1) geführt wird, welches ein Heizmittel (1a) zur Temperaturänderung und ein Sensormittel (1b) zur Bestimmung seiner Temperatur aufweist, wobei mindestens zeitweise das Heizmittel (1a) mit einer Heizleistung (P) in Form von Heizpulsen betrieben wird und eine strömungsabhängige Schwellwertzeit ($t_S$) bis zum Erreichen eines vorgegebenen Temperaturschwellwerts ($T_S$) am Sensormittel (1b) gemessen wird, **dadurch gekennzeichnet, dass** während zumindest einiger der Heizpulse (7) eine nichtkonstante Heizleistung (P) mit einem im wesentlichen sublinearen Anstiegsverhalten (P(t)) als Funktion der Zeit (t) zur zumindest teilweisen Kompensation eines nichtlinearen Verhaltens der Schwellwertzeit ($t_S$) als Funktion der Flussgeschwindigkeit (v) gewählt wird.

2. Das Verfahren nach Anspruch 1, **dadurch gekennzeichnet, dass** das Anstiegsverhalten (P(t)) als Funktion der Zeit (t) und gegebenenfalls der zu messenden Flussgeschwindigkeit (v) selber so variiert wird, dass die Schwellwertzeit ($t_S$) eine lineare Funktion der Flussgeschwindigkeit (v) zumindest an diskreten Flussgeschwindigkeitswerten ($v_i$) ist.

3. Das Verfahren nach einem der vorangehenden Ansprüche, **dadurch gekennzeichnet, dass** das Anstiegsverhalten (P(t)) proportional zu $t^m$ gewählt wird, wobei m=ein von einer Reynoldszahl des Fluids (3) abhängiger Exponent kleiner als 1 ist, insbesondere m≤0,5 und besonders bevorzugt m=0,466 für eine Reynoldszahl des Fluids (3) zwischen 40 und 4000.

4. Das Verfahren nach einem der vorangehenden Ansprüche, **dadurch gekennzeichnet, dass** das Anstiegsverhalten (P(t)) proportional zu einem zeitunabhängigen Amplitudenfaktor $(1+R_S/R_l)^{-1}$ gewählt wird, wobei $R_S$=ein erster thermischer Übergangswiderstand zwischen dem Heizmittel (1a) und einer Oberfläche (10) des Sensorelements

(1) und $R_l=(h \cdot A)^{-1}$ ein zweiter thermischer Übergangswiderstand zwischen der Oberfläche (10) des Sensorelements (1) und dem Fluid (3), wobei h=ein strömungsabhängiger Wärmeübergangskoeffizient zwischen dem Sensorelement (1) und dem Fluid (3) und A=eine Kontaktoberfläche zwischen dem Sensorelement (1) und dem Fluid (3) ist.

5. Das Verfahren nach den Ansprüchen 3 und 4, **dadurch gekennzeichnet, dass** ein zylinderförmiges, von dem Fluid

(3) transversal angeströmtes Sensorelement (1) mit einem Wärmeübergangskoeffizienten h proportional zu $v^m$ und mit einem zweiten thermischen Übergangswiderstand $R_l=\gamma \cdot v^{-m}$ mit γ=eine Konstante gewählt wird.

6. Das Verfahren nach den Ansprüchen 3 und 4, **dadurch gekennzeichnet, dass**

a) in einem ersten Verfahrensschritt diskrete Werte der Flussgeschwindigkeit ($v_i$) gewählt und zugehörige Anstiegsverhalten $P_i(t)$ der Heizleistung bestimmt werden, wobei i=1, 2, 3, ... ein Index ist,
b) in einem zweiten Verfahrensschritt eine Schar von Kalibrationskurven (8) der Schwellwertzeit ($t_S$) als Funktion der Flussgeschwindigkeit (v) für die Anstiegsverhalten ($P_i(t)$) bestimmt werden und
c) in einem dritten Verfahrensschritt aufgrund einer zuvor gemessenen Flussgeschwindigkeit oder aufgrund von a priori Information über die mutmassliche Flussgeschwindigkeit eine nach Massgabe einer gewünschten Messgenauigkeit für die Flussgeschwindigkeit (v) und einer gewünschten Messdauer ($t_S$) bevorzugte Kalibrationskurve (8) ausgewählt und zur Bestimmung der Flussgeschwindigkeit (v) verwendet wird oder
d) in einem dritten Verfahrensschritt ausgehend von der Kalibrationskurve (8) zum niedrigsten Flussgeschwindigkeitswert ($V_{i=1}$) sukzessive aufsteigend zu höheren Flussgeschwindigkeitswerten ($V_{i>1}$) oder durch Abschätzung in einem Schritt eine nach Massgabe einer gewünschten Messgenauigkeit für die Flussgeschwindigkeit (v) und einer gewünschten Messdauer ($t_S$) bevorzugte Kalibrationskurve (8) bestimmt wird und zur Bestimmung der Flussgeschwindigkeit (v) verwendet wird.

7. Das Verfahren nach Anspruch 6, **dadurch gekennzeichnet, dass** eine Anzahl und Verteilung der Kalibrationskurven (8) nach Massgabe einer gewünschten Messauflösung und eines gewünschten Messbereichs der Flussgeschwindigkeit (v) gewählt werden.

8. Das Verfahren nach den Ansprüchen 3 und 4, **dadurch gekennzeichnet, dass** $R_S/R_l<1$, vorzugsweise $R_S/R_l<0,1$

und besonders bevorzugt $R_S/R_I<0{,}01$, und ein Heizleistungsfaktor $P_0$ gewählt werden und die Schwellwertzeit $(t_S)$ als eine exakt lineare Funktion der Flussgeschwindigkeit (v) gemäss einer Gleichung $t_S(v)=(T_S-T_F)^{1/m}\bullet(P_0\bullet\gamma)^{-1/m}\bullet v$ berechnet wird, wobei $\gamma$=eine Konstante und $T_F$=eine ungestörte Fluidtemperatur ist.

9. Vorrichtung zur Ausführung des Verfahrens nach einem der vorangehenden Ansprüche, umfassend ein Sensorelement (1) mit einem Heizmittel (1a) und einem Sensormittel (1b) zur thermischen Messung in einem Fluid (3) und eine Steuer- und Auswerteeinheit (2) mit einer Heizungssteuerung (2a) zur Erzeugung von Heizpulsen (7) für das Heizmittel (1a) und einer Messeinrichtung (2b) zur Auswertung der thermischen Messung und zur Bestimmung einer Flussgeschwindigkeit (v) oder eines Massenflusses aus einer strömungsabhängigen Schwellwertzeit $(t_S)$ bis zum Erreichen eines vorgegebenen Temperaturschwellwerts $(T_S)$ am Sensormittel (1b), **dadurch gekennzeichnet, dass**

a) die Heizungssteuerung (2b) Mittel zur Erzeugung einer nichtkonstanten Heizleistung (P) mit einem im wesentlichen sublinearen Anstiegsverhalten (P(t)) als Funktion der Zeit (t) umfasst und

b) die Steuer- und Auswerteeinheit (2) Mittel zur zumindest teilweisen Kompensation eines nichtlinearen Verhaltens der Schwellwertzeit $(t_S)$ als Funktion der Flussgeschwindigkeit (v) aufweist.

10. Vorrichtung nach Anspruch 9, **dadurch gekennzeichnet, dass**

a) die Steuer- und Auswerteeinheit (2) Hardware und/oder Software zur Erzeugung eines Anstiegsverhaltens (P(t)) proportional zu $t^m$ und/oder zu einem zeitunabhängigen Amplitudenfaktor $(1+R_S/R_I)^{-1}$ aufweist, wobei t=eine Zeitvariable, m=ein von einer Reynoldszahl des Fluids (3) abhängiger Exponent, $R_S$=ein erster thermischer Übergangswiderstand zwischen dem Heizmittel (1b) und einer Oberfläche (10) des Sensorelements (1), $R_I=(h\bullet A)^{-1}$ ein zweiter thermischer Übergangswiderstand zwischen einer Oberfläche (10) des Sensorelements (1) und dem Fluid (3), h=ein strömungsabhängiger Wärmeübergangskoeffizient zwischen dem Sensorelement (1) und dem Fluid (3) und A=eine Kontaktoberfläche zwischen dem Sensorelement (1) und dem Fluid (3) ist und/oder

b) die Steuer- und Auswerteeinheit (2) Kalibrationsmittel (2c) zur Ausführung des ersten und zweiten Verfahrenschritts gemäss Anspruch 6 aufweist.

11. Vorrichtung nach einem der Ansprüche 9-10, **dadurch gekennzeichnet, dass**

a) das Sensorelement (1) einen elektrischen Heizdraht (1a, 1b) mit einem temperaturabhängigen Widerstand aufweist, der zugleich als Heizmittel (1a) und als Sensormittel (1b) betreibbar ist und/oder

b) das Sensorelement (1) eine Wärmekapazität $C_S$ und einen ersten thermischen Übergangswiderstand $R_S$ zwischen dem Heizmittel (1b) und einer Oberfläche (10) des Sensorelements (1) aufweist, wobei die Schwellwertzeit oder Messdauer $t_S>C_S\bullet R_S$, insbesondere $t_S>10\bullet C_S\bullet R_S$, ist und/oder

c) das Sensorelement (1) eine zylindrische Gestalt mit einem Durchmesser (d) hat und bei seitlicher Anströmung durch das Fluid (3) mit der Flussgeschwindigkeit (v) näherungsweise einen strömungsabhängigen Wärmeübergangskoeffizienten $h=\lambda/d\bullet1,11\bullet C\bullet Pr^{0{,}31}\bullet Re^m$ aufweist, wobei $\lambda$=eine Wärmeleitfähigkeit des Fluids (3), C=ein Parameter und m=ein Exponent, die von einer Reynoldszahl Re des Fluids (3) abhängen, und Pr=eine Prandtlzahl des Fluids (3).

Fig. 1

Fig. 2a

Fig. 2b

Fig. 2c

Fig. 2d

## Fig. 3a

## Fig. 3b

## Fig. 3c

## Fig. 4

$P_3 (v_3 = 2 \text{ m/s})$

$t_s (v)$

$P_2 (v_2 = 1 \text{ m/s})$

$P_1 (v_1 = 0,25 \text{ m/s})$

8

v (m/s)

**Europäisches Patentamt**

## EUROPÄISCHER RECHERCHENBERICHT

Nummer der Anmeldung

EP 02 00 0767

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | EP 0 698 786 A (RICOH SEIKI CO LTD) 28. Februar 1996 (1996-02-28) * Spalte 25, Zeile 35 - Spalte 32, Zeile 24; Abbildungen 38A,38B * ----- | 1,2,9 | G01F1/698 |

**RECHERCHIERTE SACHGEBIETE (Int.Cl.7)**

G01F

Der vorliegende Recherchenbericht wurde für alle Patentansprüche erstellt

| Recherchenort | Abschlußdatum der Recherche | Prüfer |
|---|---|---|
| DEN HAAG | 13. Juni 2002 | Boerrigter, H |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...............................................................................................
& : Mitglied der gleichen Patentfamilie,übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**                    EP 02 00 0767

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-06-2002

| Im Recherchenbericht angeführtes Patentdokument | Datum der Veröffentlichung | Mitglied(er) der Patentfamilie | Datum der Veröffentlichung |
|---|---|---|---|
| EP 0698786        A | 28-02-1996 | EP    0698786 A1 | 28-02-1996 |

EPO FORM P0461

Für nähere Einzelheiten zu diesem Anhang : siehe Amtsblatt des Europäischen Patentamts, Nr.12/82